# EUROPEAN PATENT SPECIFICATION

(11) **EP 0 427 682 B1**
(45) Date of publication and mention of the grant of the patent: **22.06.1994**
(21) Application number: 90830395.1
(22) Date of filing: 06.09.1990
(51) Int. Cl.: F16L 11/08

(54) **High-strength flexible tubular element for hydraulic systems**
Hoch verstärktes flexibles Rohrelement für Hydrauliksysteme
Un élement tubulaire flexible à haute résistence renforcé pour systèmes hydrauliques

(30) Priority: 07.11.1989 IT 2205389 U
(43) Date of publication of application: 15.05.1991
(73) Proprietor: Parigi, Cesare, I-20052 - Monza (Milano) (IT)
(72) Inventor: Parigi, Cesare, I-20052 - Monza (Milano) (IT)
(74) Representative: Cicogna, Franco

(56) References cited:
- DE-A- 3 332 550
- DE-A- 3 401 931
- GB-A- 2 218 178

## Description

### BACKGROUND OF THE INVENTION

The present invention relates to a high strength flexible tubular element for hydraulic systems in general.

As is known, in order to provide fitting lengths in hydraulic systems, for example for connecting sanitary articles to the hydraulic net, there are used flexible tubular elements or hoses, a most common configuration of which comprises a flexible tubular body, usually made of a plastic material, which, in order to resist against the operating pressure, is arranged within a holding or encompassing sheath.

This encompassing sheath is mainly designed for resisting, not only against the operative pressures, which have a comparatively low value, but especially against the very high istantaneous pressures which occur upon a water hammering condition.

More specifically, the outer encompassing sheath is usually made of a plurality of braided filament sets, which comprise either steel or galvanized steel filaments.

Known holding sheaths, on the other hand, while having a satisfactory resistance against istantaneous pressure and twisting forces occurring during the coupling operation of the flexible tubular element to the hydraulic system, have however a poor flexibility, because of an intrinsic stiffness due to the provision of the steel filaments.

Moreover, these known encompassing sheaths have a comparatively high cost.

In order to overcome this problem there have been designed flexible tubular elements the encompassing or holding sheath of which is made of plastic material filaments, usually based on polyester nylon and the like materials, which have a satisfactory flexibility; however, they have a comparatively small resistance to the operating pressures and, especially, a very small resistance against possible twisting forces.

Moreover, yet another drawback of a plastic material encompassing sheath is that such a sheath tends to expand as the temperature is increased thereby practically loosing its holding power.

The document GB 2 218 178 discloses an expensive hose comprising a plurality of superimposed resilient material layer and, between two of said resilient material layer, there is interposed a metal filament layer. The document DE-A-3 332 550 discloses a tubular element having substantially the features of the pre-characterizing part of the main claim.

### SUMMARY OF THE INVENTION

Accordingly, the aim of the present invention is to overcome the above mentioned drawbacks, by providing a flexible tubular element which includes all of the advantages of the known encompassing or holding sheaths thereinabove disclosed, which obviating their disadvantages.

Within the scope of the above mentioned aim, a main object of the present invention is to provide such a high strength flexible tubular element for hydraulic systems which has a comparatively low cost, if compared with conventional tubular elements including a sheath formed by metal filaments, while having a substantially equivalent performance.

Yet another object of the present invention is to provide such a high strength flexible tubular element for hydraulic systems which is very reliable and safe in operation and which, moreover, can be easily made starting from easily available elements and materials.

According to one aspect of the present invention, the above mentioned aim and objects, as well as yet other objects, which will become more apparent hereinafter, are achieved by a high strength flexible tubular element for hydraulic systems in general, having the features of the characterizing part of the main claim.

### BRIEF DESCRIPTION OF THE DRAWINGS

Further characteristics and advantages of the invention will become apparent from the following detailed disclosure of a high strength flexible tubular element for hydraulic systems in general, which is illustrated, by way of an indicative but not limitative example, in the accompanying drawing, where:
Figure 1 is a schematic view showing a flexible tubular element according to the invention;
Figure 2 is a layered view showing a flexible tubular element according to the invention including an encompassing sheath comprising alternating sets of metal material filaments;
   and
Figure 3 is another schematic layered or exploded view showing a holding or encompassing sheath including a metal material filament for each plastic material filament set.

### DESCRIPTION OF THE PREFERRED EMBODMENT

With reference to the figures of the accompanying drawings, the high strength flexible tubular element for hydraulic systems in general, which is indicated overally at the reference number 1, comprises an inner tubular body 2, of a conventionally known type, made of a plastic material or other like material, adapted to provide the flexible tubular element with a suitable flexibility, to the end portions of said tubular body there being coupled conventional fittings overally indicated at the reference number 3.

On the outside of the flexible tubular body 2 there is provided an encompassing or holding sheath, indicated overally at the reference number 4, which comprises a plurality of mutually braided filament sets.

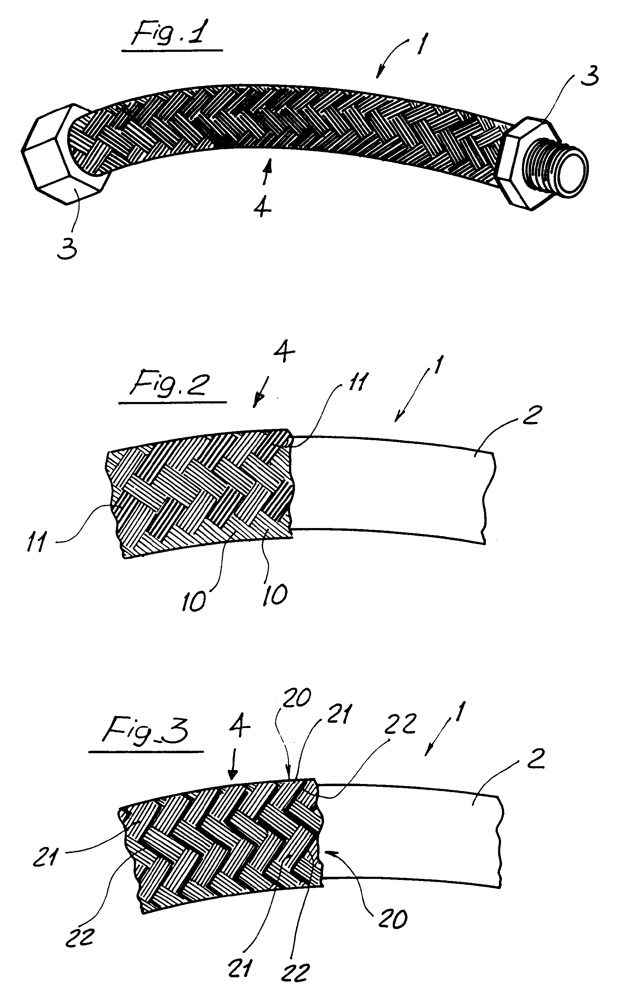

As clearly shown in Figure 2, the main feature of the invention is that the encompassing or holding sheath is made of a plurality of filament sets, indicated at 10, formed by plastic material filaments such as, for example, a polyester, nylon and the like material; at least a filament set, indicated at 11, being made of metal material filaments such as steel or galvanized steel filaments.

Figure 3 shows that in each filament set, indicated at 20, there is provided, in addition to the plastic material filaments 21, at least a filament 22 made of a metal material.

With the disclosed arrangement it is possible to advantageously associate the typical characteristics of the metal sheath, that is a very good resistance to pressure and twisting, with the typical characteristics of the plastic material filament sheaths, that is very good flexibility and handling characteristics of the tube.

Moreover, the provision of the metal filaments greatly reduces the thermal expanding phenomena of the sheath, as the outer and/or inner temperature is increased, thereby greatly increasing the pressure resistance of the sheath.

Another important aspect of the invention is that the cost of the finished product can be compared to the cost of the plastic material filament sheath which, as is known, has a very reduced cost with respect to the metal filaments.

From the above disclosure it should be apparent that the invention fully achieves the intended aim and objects.

In particular, the fact is to be pointed out that the association of metal filaments to plastic material filaments provides a flexible tubular element having very good resistance characteristics, jointly with a very reduced cost.

## Claims

1. A high strength flexible tubular element (1) for hydraulic systems in general, comprising a tubular flexible body (2) arranged inside an encompassing sheath (4), said sheath (4) including at least a filament set (11) comprising metal material filaments and a plurality of adjoining filament sets (10) made of a textile material, characterized in that said filament sets define a single braided layer forming said sheat and that said plurality of filament sets comprise a plurality of plastic material filament sets and that at least a filament (11) of each said set (10) comprises a metal material filament.

2. A high strength flexible tubular element according to the preceding claims, characterized in that said plastic material filaments comprise a polyester and/or nylon plastic material.

3. A high strength flexible tubular element according to one or more of the preceding claims, characterized in that said metal material filaments comprise steel and galvanized steel filaments.

## Patentansprüche

1. Ein hoch verstärktes flexibles Rohrelement (1) für Wassersysteme im allgemeinen, umfassend einen flexiblen Rohrkörper (2), angebracht innerhalb einer umgebenden Hülle (4), diese Hülle (4) mindestens eine Filamentgruppe (11) einschließend, umfassend Metallmaterialfilamente und eine Vielzahl von benachbarten Filamentgruppen (10), hergestellt aus Textilmaterial, dadurch gekennzeichnet, daß diese Filamentgruppen eine einzelne geflochtenen Schicht definieren, diese Hülle bildend, und daß diese Vielzahl von Filamentgruppen eine Vielzahl von Plastikmaterialfilamentgruppen umfaßt, und daß mindestens ein Filament (11) jeder dieser Gruppen (10) ein Metallmaterialfilament umfaßt.

2. Ein hoch verstärktes flexibles Rohrelement gemäß des vorstehenden Anspruchs, dadurch gekennzeichnet, daß diese Plastikmaterialfilamente ein Polyester- und/oder Nylonplastikmaterial umfassen.

3. Ein hoch verstärktes flexibles Rohrelement gemäß einem oder mehrerer der vorstehenden Ansprüche, dadurch gekennzeichnet, daß diese Metallmaterialfilamente Stahl- und galvanisierte Stahlfilamente umfassen.

## Revendications

1. Élément tubulaire flexible à haute résistance (1) pour systèmes hydrauliques en général, comprenant un corps tubulaire flexible (2) arrangé à l'intérieur d'une gaine renfermante (4), ladite gaine (4) comprenant au moins un jeu de fibres (11) comprenant des filaments en matérieau métallique et une multiplicité de jeux de fibres avoisinants (10) faits en matérieau textile, caractérisé en ce que lesdits jeux de fibres définissent une single couche tessée qui forme ladite gaine, et que ladite multiplicité de jeux de fibres comprennent une multiplicité de jeux de fibres en matière plastique, et qu'au moins une fibre (11) de chacun desdits jeux (10) comprend un filament en matérieau métallique.

2. Élément tubulaire flexible à haute résistance selon la Revendication précédente, caractérisé en ce que lesdites fibres en matérieau plastique comprennent un matérieau plastique en polyester et/ou nylon.

3. Élément tubulaire flexible à haute résistance selon l'une ou plusieures des Revendications précédentes, caractérisé en ce que lesdits filaments en matérieau métallique comprennent des filaments en acier et en acier galvanisé.
